(19) Europäisches Patentamt
European Patent Office
Office européen des brevets

(11) EP 4 746 062 A1

(12) EUROPEAN PATENT APPLICATION

(43) Date of publication:
20.05.2026 Bulletin 2026/21

(21) Application number: 25213561.1

(22) Date of filing: 05.11.2025

(51) International Patent Classification (IPC):
H01M 4/131 (2010.01)      H01M 4/36 (2006.01)
H01M 4/505 (2010.01)      H01M 4/525 (2010.01)
H01M 10/0525 (2010.01)

(52) Cooperative Patent Classification (CPC):
H01M 4/525; H01M 4/131; H01M 4/366;
H01M 4/505; H01M 10/0525

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 18.11.2024 KR 20240164349

(71) Applicants:
• SK On Co., Ltd.
Seoul 03161 (KR)
• SK Innovation Co., Ltd.
Seoul 03188 (KR)

(72) Inventors:
• CHOI, Ji Hoon
34124 Daejeon (KR)
• KWON, Bob Jin
34124 Daejeon (KR)
• KWEON, Hee Jun
34124 Daejeon (KR)
• KIM, Eun Hyo
34124 Daejeon (KR)
• JANG, Dong Il
34124 Daejeon (KR)
• JANG, Ji Hye
34124 Daejeon (KR)

(74) Representative: Prüfer & Partner mbB
Patentanwälte · Rechtsanwälte
Sohnckestraße 12
81479 München (DE)

(54) LITHIUM SECONDARY BATTERY

(57) A lithium secondary battery according to the present disclosure includes a cathode and an anode disposed opposite to the cathode. The cathode has a gliding step height of 20 nm or less. The gliding step height is defined as the distance between a pair of parallel lines having a non-zero slope that can include at least two mountain-like shapes observed in a line scan graph obtained using an atomic force microscope (AFM) of the cathode surface after 500 charge-discharge cycles in a fully discharged state.

[FIG. 8B]

EP 4 746 062 A1

**Description**

BACKGROUND

1. Field of the Invention

The present disclosure relates to a lithium secondary battery.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery is actively developed and applied due to its high operating voltage, high energy density per unit weight, and advantages in charging speed and weight reduction.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

It is preferable for the lithium secondary battery to have high capacity, stability, and long cycle life. Thus, methods have been proposed for introducing a single-particle structured cathode active material as the cathode active material or for controlling the composition of the cathode active material layer. However, the structure of the cathode active material deforms during charging and discharging of the battery, resulting in a significant decrease in battery capacity. Therefore, there is a need for a high-capacity cathode with sufficient cycle life.

SUMMARY

An object of the present disclosure is to provide a lithium secondary battery having improved electrochemical properties.

A lithium secondary battery according to the present disclosure includes: a cathode; and an anode disposed opposite to the cathode. The cathode has a gliding step height of 20 nm or less. The gliding step height is defined as the distance between a pair of parallel lines having a non-zero slope and including at least two mountain-like shapes observed in a line scan graph obtained using an atomic force microscope (AFM) on the surface of the cathode in a fully discharged state after 500 charge-discharge cycles.

According to exemplary embodiments, the gliding step height of the cathode may be 10 nm or less.

According to exemplary embodiments, the cathode may include a cathode current collector and a cathode active material layer disposed on one surface of the cathode current collector. The cathode active material layer may include coated particles. The coated particles may include a core and at least one lithium-nickel metal oxide particle. The core may include lithium-nickel metal oxide particles having a layered structure and may have a single-particle structure. The lithium-nickel metal oxide particles may be disposed on the surface of the core.

According to exemplary embodiments, the metal oxide particles may have a median particle diameter (D50) of 100 nm to 450 nm.

According to exemplary embodiments, the metal oxide particles may have a median particle diameter (D50) of 220 nm to 300 nm.

According to exemplary embodiments, the metal oxide particles may be arranged in an island-like form on the surface of the core.

According to exemplary embodiments, the metal oxide particles may have a spinel crystal structure, a perovskite crystal structure, a garnet crystal structure, or a NASICON crystal structure.

According to exemplary embodiments, the metal oxide particles may include at least one selected from the group consisting of Co, Ba, Ti, Sr, Li, La, Zr, Al, Y, W and P.

According to exemplary embodiments, the content of the metal oxide particles may be 500 ppm to 3,000 ppm based on the total weight of the coated particles.

According to exemplary embodiments, the nickel content of the lithium-nickel metal oxide may be 60 mol% to 99 mol% based on the total molar amount of elements excluding lithium and oxygen.

According to exemplary embodiments, the core may have a median particle diameter (D50) of 1 $\mu$m to 10 $\mu$m.

According to exemplary embodiments, the core may have a crystal grain size of 200 nm to 600 nm.

According to exemplary embodiments, the 500 charge-discharge cycles are performed by repeatedly charging the lithium secondary battery to a voltage of 4.3 V to 4.5 V and discharging it to a voltage of 3.0 V 500 times.

According to exemplary embodiments, the lithium secondary battery has an operating voltage of 4.3 V to 4.7 V.

The lithium secondary battery according to exemplary embodiments of the present disclosure may exhibit minimal deformation of the crystal structure and morphology of particles even during repeated charge and discharge cycles, and may have high capacity. Consequently, the cycle life characteristics of a high-capacity battery may be improved.

The lithium secondary battery according to exemplary embodiments of the present disclosure may have high capacity while exhibiting minimal capacity decrease during repeated charge and discharge cycles.

The lithium secondary battery according to the present disclosure may be widely applied in green technology fields, such as electric vehicles, battery charging stations, as well as solar power generation, wind power generation, and the like, which use the batteries. In addition, the cathode for a secondary battery according to the present disclosure and lithium secondary batteries containing the same may be used in eco-friendly electric vehicles, hybrid vehicles, and the like, which are aimed at mitigating climate change by reducing air pollution and greenhouse gas emissions.

BRIEF DESCRIPTION OF THE DRAWINGS

The above and other objects, features and advantages of the present disclosure will be more clearly understood from the following detailed description taken in conjunction with the accompanying drawings, in which:

FIGS. 1 and 2 are schematic plan and cross-sectional views, respectively, illustrating a lithium secondary battery according to exemplary embodiments;

FIG. 3 is a schematic cross-sectional view illustrating a coated particle according to an exemplary embodiment of the present disclosure;

FIG. 4 is a schematic cross-sectional view illustrating a conventional cathode active material particle after charge and discharge;

FIG. 5 is a schematic cross-sectional view illustrating a coated particle according to an exemplary embodiment of the present disclosure after charge and discharge;

FIG. 6 is a scanning electron microscope (SEM) image of the coated particle of Example 1;

FIG. 7 is a scanning electron microscope (SEM) image of the coated particle of Comparative Example 2;

FIG. 8A is an atomic force microscope (AFM) image of the cathode of Example 2 after repeated charge and discharge cycles;

FIG. 8B is a graph showing a height profile (step height) of the cathode of Example 2 after repeated charge and discharge cycles, scanned along the dotted line in FIG. 8A;

FIG. 9A is an AFM image of the cathode of Comparative Example 2 after repeated charge and discharge cycles; and

FIG. 9B is a graph showing a height profile of the cathode of Comparative Example 2 after repeated charge and discharge cycles, obtained by line scanning along the dotted line in FIG. 9A.

DETAILED DESCRIPTION

Exemplary embodiments of the present disclosure provide a lithium secondary battery.

According to exemplary embodiments of the present disclosure, the lithium secondary battery includes a cathode active material for a secondary battery including coated particles having metal oxide particles on a core surface. In addition, the lithium secondary battery according to exemplary embodiments of the present disclosure includes a cathode including the cathode active material for a secondary battery. The lithium secondary battery according to exemplary embodiments of the present disclosure includes the cathode.

The term "median particle diameter (D50)" as used herein refers to an average particle diameter of a plurality of particles, and D50 may be the median particle diameter obtained at a point corresponding to 50% of the cumulative volume distribution of the prepared active material particles.

The method for measuring the cumulative volume distribution of the particles is not particularly limited, but may be measured using a laser diffraction particle size analyzer. For example, a Malvern 3000 device may be used.

Hereinafter, exemplary embodiments of the present disclosure will be described in detail with reference to the accompanying drawings. However, these embodiments are merely illustrative, and the present disclosure is not limited to the specific embodiments described as examples.

The lithium secondary battery according to exemplary embodiments includes the above-described cathode, and an anode disposed opposite to the cathode. The lithium secondary battery may include a separator interposed between the cathode and the anode, and an electrolyte.

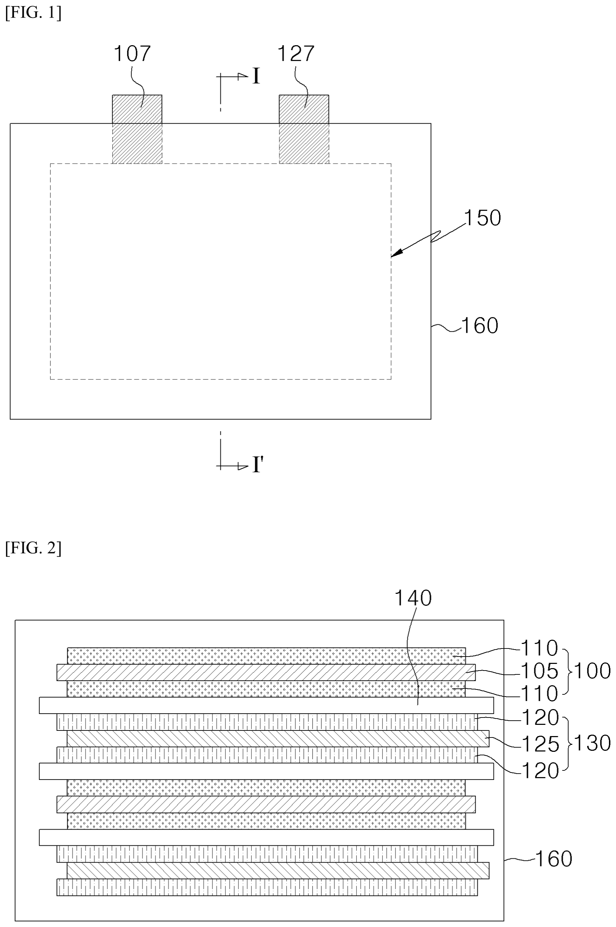

Hereinafter, the lithium secondary battery according to exemplary embodiments will be described in more detail with reference to the drawings. FIGS. 1 and 2 are schematic plan and cross-sectional views, respectively, illustrating the lithium secondary battery according to exemplary embodiments. FIG. 2 is a cross-sectional view taken along line I-I' in FIG. 1.

Referring to FIGS. 1 and 2, the lithium secondary battery may include an electrode assembly including a cathode 100, an anode 130, and a separator 140 interposed between the cathode and the anode. The electrode assembly may be accommodated in a case 160 together with an electrolyte and may be impregnated with the electrolyte.

The cathode 100 may include a cathode current collector 105 and a cathode active material layer 110, and the cathode active material layer 110 may include a cathode active material.

The cathode current collector 105 may include, for example, stainless steel, nickel, aluminum, titanium, copper, or an alloy thereof, and alternately, may include aluminum or an aluminum alloy.

The cathode active material layer 110 may be disposed on at least one surface of the cathode current collector 105. For example, the cathode active material layer 110 may be disposed on one or both surfaces of the cathode current collector 105.

The cathode active material may include coated particles.

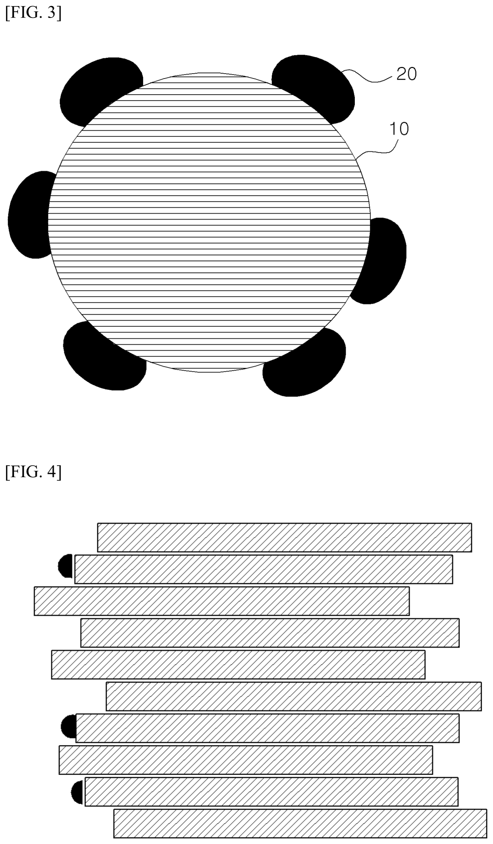

FIG. 3 is a schematic cross-sectional view illustrating a coated particle according to an exemplary embodiment of the present disclosure.

Referring to FIG. 3, the coated particle may include a core 10 and metal oxide particles 20 disposed on the surface of the core 10.

The core 10 may include a lithium-nickel metal oxide. The lithium-nickel metal oxide may further include at least one of cobalt (Co), manganese (Mn) and aluminum (Al) in addition to nickel.

According to exemplary embodiments, the lithium-nickel metal oxide may include nickel and manganese. Therefore, the battery may have a high capacity while exhibiting improved cycle life stability.

According to exemplary embodiments, the content of nickel based on the total molar amount of elements excluding lithium and oxygen in the lithium-nickel metal oxide may be 60 mol% to 99 mol%.

Within the above range, an increase in internal resistance due to changes in the crystal structure of the cathode active material during fast charging and discharging of the battery may be reduced without significantly reducing the cathode capacity.

According to exemplary embodiments, the lithium-nickel metal oxide may include a layered structure represented by Formula 1 below.

$$[\text{Formula 1}] \qquad Li_xNi_aM_bO_{2+z}$$

In Formula 1, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 1 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

For example, the lithium-nickel metal oxide may include a layered structure or a crystal structure represented by Formula 1-1 below.

$$[\text{Formula 1-1}] \qquad Li_xNi_aMl_{b1}M2_{b2}O_{2+z}$$

In Formula 1-1, M1 may include Co, Mn and/or Al. M2 may include the above-described auxiliary elements. In Formula 1-1, x, a, bl, b2 and z may satisfy $0.9 \leq x \leq 1.2$, $0.3 \leq a \leq 0.8$, $0.01 \leq b1 \leq 0.4$, $0 \leq b2 \leq 0.1$, and $-0.5 \leq z \leq 0.1$.

The lithium-nickel metal oxide may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal oxide particles, or may penetrate through the surface of the lithium-nickel metal oxide particles to be incorporated into the bonding structure represented by Formula 1 or Formula 1-1 above.

According to exemplary embodiments, the core 10 may have a single-particle structure. The term "single-particle structure" as used herein refers to a structure that excludes, for example, a secondary particle formed by agglomeration or assembly of a plurality of primary particles (e.g., greater than 10) into a substantially single particle.

For example, the core 10 may be composed of particles having a substantially single particle form, and a secondary-particle structure in which primary particles are assembled or agglomerated may be excluded. In addition, the term "single-particle structure" as used herein does not exclude a structure in which 2 to 10 single particles are attached to or in close contact with each other to form a monolithic shape.

The single-particle structure may include a structure in which a plurality of primary particles are integrally fused together and substantially transformed into a single particle form.

For example, the core 10 may have a single-particle structure including 10 or fewer crystal grains.

For example, the core 10 may have a single-crystal structure. The term "single-crystal structure" may refer to a structure in which a single particle is composed of a single crystal grain. For example, the single-crystal structure may be identified based on an ion image obtained by analyzing the particle cross-section using a focused ion beam (FIB). If the particle has a single-crystal structure, a single crystal may be observed in the FIB analysis image depending on the difference in crystal orientation.

According to exemplary embodiments, the core 10 may have a median particle diameter (D50) of 1 $\mu$m to 10 $\mu$m. In some embodiments, the median particle diameter (D50) of the core 10 may be 2 $\mu$m to 5 $\mu$m.

Within the above range, the stability of the cathode may be improved, and the durability of the cathode may not be degraded during repeated charge and discharge cycles of the battery.

According to exemplary embodiments, the core 10 may have a crystal grain size of 200 nm to 600 nm. In some embodiments, the crystal grain size of the core 10 may be 200 nm to 400 nm.

For example, the crystal grain size of the core 10 may be measured by X-ray diffraction (XRD) analysis. According to exemplary embodiments, the crystal grain size may be calculated using the full width at half maximum (FWHM) of the peak corresponding to the crystal plane (104) in the XRD pattern obtained by XRD analysis of the core 10, using Equation 1 below of the Scherrer equation.

$$[\text{Equation 1}]$$

$$L = \frac{0.9\lambda}{\beta cos\theta}$$

In Equation 1, L denotes the crystal grain size, $\lambda$ denotes the X-ray wavelength, $\beta$ denotes the full width at half maximum of an arbitrary peak, and $\theta$ denotes the diffraction angle.

For example, the XRD analysis may be performed on dried powder of the metal oxide particles using Cu K$\alpha$ rays as a light source, within a diffraction angle (2$\theta$) range of 10° to 120°, and at a scan rate of 0.0065°/step.

The lithium-nickel metal oxide may have a layered structure. The layered structure allows a large amount of lithium ions to be inserted between the two-dimensional layers, thereby increasing the capacity of the cathode.

FIG. 4 is a schematic cross-sectional view illustrating a conventional cathode active material particle after charge and discharge.

Referring to FIG. 4, when a battery including a cathode active material containing the lithium-nickel metal oxide is charged, lithium ions may be inserted unevenly between the layers. Accordingly, interlayer slippage, for example, a gliding phenomenon, may occur, which may result in the formation of irregularities on the surface of the charged cathode active material, and the shape of the cathode active material may not be completely restored in a reversible manner after discharge.

When the battery is repeatedly charged and discharged, damage such as cracks may occur around the region where the gliding phenomenon occurs. This may irreversibly change the layered structure to a rock salt structure. The gliding phenomenon is particularly likely to occur when the cathode active material has a single-particle structure.

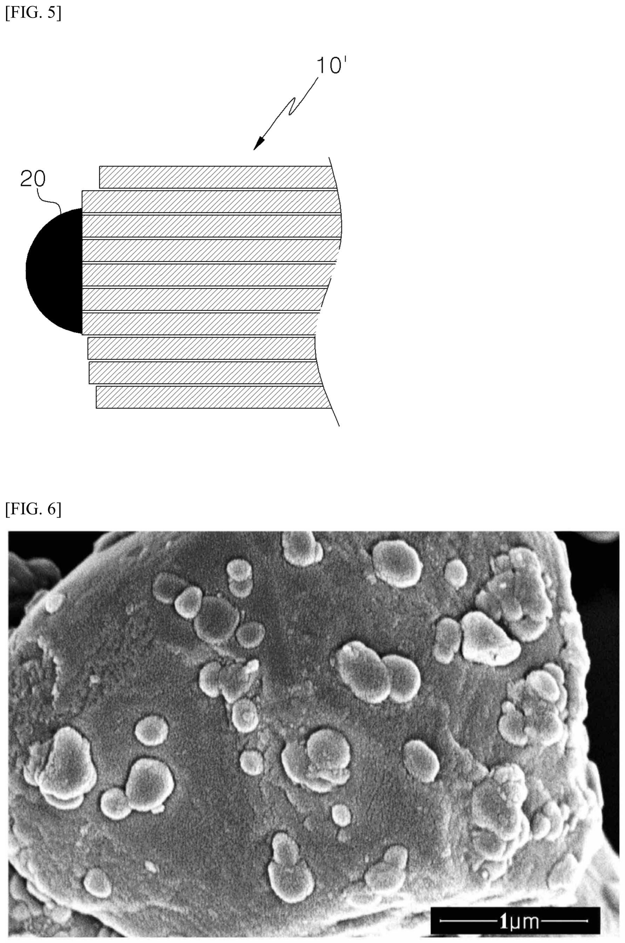

FIG. 5 is a schematic cross-sectional view illustrating a coated particle according to an exemplary embodiment of the present disclosure after charge and discharge.

The coated particle according to the present disclosure may include at least one metal oxide particle 20 disposed on the surface of the core 10 including a lithium-nickel metal oxide having the layered structure. Accordingly, the metal oxide particle 20 may suppress the formation of step heights caused by gliding, and cracks and changes in the crystal structure of the cathode active material particles due to the gliding phenomenon may be prevented even during repeated charge and discharge cycles.

The metal oxide particle 20 may have a median particle diameter (D50) of 100 nm to 450 nm. According to exemplary embodiments, the median particle diameter (D50) of the metal oxide particles 20 may be 200 nm to 400 nm, 210 nm to 350 nm, or 220 nm to 300 nm.

Within the above range, the gliding phenomenon caused by the layered structure of the lithium-nickel metal oxide may be suppressed, the durability of the cathode active material may be enhanced, and the cycle life characteristics of the battery may be improved.

If the median particle diameter (D50) of the metal oxide particles 20 is less than 100 nm, the particle diameter of the metal oxide particles 20 may not be sufficiently larger than the gliding step height where gliding occurs, and thus may fail to suppress the occurrence of the step height (see, for example, FIG. 4). Consequently, the cycle life characteristics of the battery may deteriorate.

If the median particle diameter (D50) of the metal oxide particles 20 exceeds 450 nm, the volume of the metal oxide particles 20 on the outer surface of the core 10 may be large, which may relatively reduce the packing density of the cathode active material in the cathode active material layer. In addition, the coated portion with large particles may act as a resistance to absorbing and releasing lithium ions. Consequently, the energy density and capacity of the cathode may be reduced.

According to exemplary embodiments, the metal oxide particles 20 may be arranged in an island-like form on the surface of the core. The term "island-like form" refers to a concept distinct from a continuous layer-type coating, wherein a plurality of metal oxide particles 20 may not be disposed entirely on the surface of the core 10.

For example, the plurality of metal oxide particles 20 may be disposed on at least a portion of the surface of the core 10. For example, the plurality of metal oxide particles 20 may be disposed in two or more regions that are spaced apart from each other on the surface of the core 10.

Therefore, a migration path for lithium ions may be secured, allowing for smooth absorbing and releasing of lithium ions between the layered structures.

According to exemplary embodiments, the metal oxide particles 20 may have a spinel crystal structure, a perovskite crystal structure, a garnet crystal structure, or a NASICON crystal structure. The metal oxide particles 20 may include an oxide-based solid electrolyte, thereby preventing degradation of the lithium ion conductivity and/or electrical conductivity of a cathode including the coated particles.

According to exemplary embodiments, the metal oxide particles 20 may include Co, Ba, Ti, Sr, Li, La, Zr, Al, Y, W and P. For example, the metal oxide particles 20 may include Co, Ba, Ti, Sr, Li, La, Zr, Al, and the like.

In one embodiment, the metal oxide particles 20 may not include nickel. Therefore, the metal oxide particles 20 may not function as an active material during charging and discharging of the battery, and thus may undergo no volume change due to charging and discharging, thereby more effectively preventing the gliding phenomenon of the core.

If the metal oxide particles 20 are simple inorganic materials lacking lithium ion conductivity, the portion coated on the surface of the core 10 having a single-particle structure may hinder the passage of lithium ions, which may reduce the battery capacity or increase the internal resistance of the cell.

The cathode active material according to the present disclosure may prevent battery capacity reduction caused by coating with the metal oxide particles 20 having a lithium ion conductive structure, while also improving the gliding phenomenon of the core 10 of a single-particle structure.

When the metal oxide particles 20 have a spinel crystal structure, they may include a compound having a spinel crystal structure or a spinel-like crystal structure, for example, $Co_3O_4$.

If the metal oxide particles 20 have a garnet crystal structure, they may include a compound having a garnet crystal structure or a garnet-like crystal structure, such as an LLZO-based compound.

The LLZO-based compound may be an oxide containing lithium, lanthanum and zirconium. The LLZO-based compound may further contain Al, Ga, In, Sc, Ba, Nb, and the like. For example, it may include $Li_7La_3Zr_2O_{12}$.

If the metal oxide particles 20 have a NASICON crystal structure, the compound may include a NASICON crystal structure or a NASICON-like crystal structure, such as a LATP-based compound, a LYZP-based compound, or a LAGP-based compound.

The LATP-based compound may be a phosphate including lithium, aluminum and titanium. For example, it may include $Li_{1.3}Al_{0.3}Ti_{1.7}(PO_4)_3$.

The LYZP-based compound may be a phosphate including lithium, yttrium and zirconium. For example, it may include $Li_{1.3}Al_{0.3}Ti_{1.7}(PO_4)_3$. The LAGP compound may be a phosphate including lithium, aluminum and germanium. For example, it may include $Li_{1.5}Al_{0.5}Ge_{1.5}(PO_4)_3$.

If the metal oxide particles 20 have a perovskite crystal structure, the compound may include an LLTO-based compound, $BaTiO_3$, $SrTiO_3$, or the like, as a perovskite crystal structure or a perovskite-like crystal structure.

The LLTO-based compound may be an oxide including lithium, lanthanum and titanium. For example, it may include $Li_{0.31}La_{0.56}TiO_3$.

In exemplary embodiments, the content of the metal oxide particles may be 500 ppm to 3,000 ppm based on the total weight of the coated particles. In some embodiments, the content of the metal oxide particles may be 700 ppm to 1,500 ppm or 800 ppm to 1,200 ppm based on the total weight of the coated particles.

Within the above range, the gliding phenomenon of the layered structure may be further suppressed, and the capacity of the battery may not decrease.

In exemplary embodiments, the content of the coated particles may be 50% by weight ("wt%") or more based on the total weight of the cathode active material. In some embodiments, the content of the coated particles may be 60 wt% or more, 70 wt% or more, 80 wt% or more, or 90 wt% or more based on the total weight of the cathode active material. For example, the cathode active material may be substantially formed of the coated particles. For example, the cathode active material may be composed of the coated particles.

In some embodiments, the cathode active material may further include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 2 below.

$$[\text{Formula 2}] \qquad p[LhMnO_3]\cdot(1\text{-}p)[Li_qJO_2]$$

**In** Formula 2, p and q may satisfy 0<p<1, and $0.9 \le q \le 1.2$, and J may include at least one element selected from the group consisting of Mn, Ni, Co, Fe, Cr, V, Cu, Zn, Ti, Al, Mg and B.

According to exemplary embodiments, a method for preparing the cathode active material for a secondary battery may be provided. For example, the cathode active material for a secondary battery may be prepared using the following methods, but is not limited thereto.

According to exemplary embodiments, core particles including a lithium-nickel metal oxide having a layered structure may be mixed with metal oxide particles. The mixing may be performed by a dry method or a wet method.

The mixture produced by the mixing may be heat-treated to prepare the coated particles. For example, the mixture may be heat-treated at a temperature of 500°C to 750°C to prepare the coated particles.

For example, the heat treatment may be performed in an oxygen atmosphere.

For example, the heat treatment may be performed within the above temperature range for 2 to 5 hours.

The cathode active material for a secondary battery may be mixed and stirred with a binder, a conductive material, and/or a dispersant in a solvent to prepare a slurry. The slurry may be coated onto a cathode current collector, followed by drying and roll-pressing to prepare a cathode.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as the cathode binder. In this case, the amount of the binder for forming the cathode active material layer may be reduced and the amount of the cathode active material may be relatively increased, thereby improving the output and capacity of the secondary battery.

The conductive material may be included to promote electron migration between the active material particles. For example, the conductive material may include carbon-based conductive materials such as graphite, carbon black, graphene, or carbon nanotubes; and/or metal-based conductive materials such as tin, tin oxide, and titanium oxide; and perovskite materials such as $LaSrCoO_3$, and $LaSrMnO_3$.

The solvent may include, for example, N-methyl-2-pyrrolidone (NMP), dimethylformamide, dimethylacetamide, N,N-dimethylaminopropylamine, ethylene glycol, tetrahydrofuran, and the like.

The anode 130 may include an anode current collector 125 and an anode active material layer 120 formed by coating the anode current collector 125 with an anode active material. If necessary, the anode may include an anode binder and a conductive material.

For example, as the anode active material, any active material known in the art may be used, so long as it is capable of absorbing and releasing lithium ions. For example, carbon-based materials such as crystalline carbon, amorphous carbon, carbon composites, or carbon fibers, or the like; a lithium alloy; a silicon (Si) compound or tin may be used. Examples of the amorphous carbon may include hard carbon, coke, mesocarbon microbeads (MCMB), mesophase pitch-based carbon fibers (MPCF), or the like.

Examples of the crystalline carbon may include graphite-based carbon such as natural graphite, artificial graphite, graphitized coke, graphitized MCMB, graphitized MPCF or the like. Elements included in the lithium alloy may include aluminum, zinc, bismuth, cadmium, antimony, silicon, lead, tin, gallium or indium or the like.

The silicon compound may include, for example, silicon, silicon oxide or a silicon-carbon composite compound such as silicon carbide (SiC).

In some embodiments, the content of the silicon active material based on the total weight of the anode active material may be 1 to 20 wt%, 1 to 15 wt%, or 1 to 10 wt%.

For example, a slurry may be prepared by mixing and stirring the anode active material with a binder, a conductive material and/or a dispersant in a solvent. The anode current collector 125 may be coated with the slurry, then compressed and dried to prepare the anode active material layer 120.

For example, an anode slurry may be prepared by mixing the anode active material with the above-described components in a solvent. The anode slurry may be applied or deposited on the anode current collector, and then dried and roll-pressed to prepare the anode active material layer 120. The coating process may be performed using methods such as gravure coating, slot die coating, simultaneous multilayer die coating, imprinting, doctor blade coating, dip coating, bar coating or casting, etc., but it is not limited thereto. The anode active material layer 120 may further include a binder and optionally may further include a conductive material, a thickener, etc.

Non-limiting examples of the solvent may include water, purified water, deionized water, distilled water, ethanol, isopropanol, methanol, acetone, n-propanol, t-butanol, etc.

The above-described materials that can be used when manufacturing the cathode as the binder, conductive material and thickener may also be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder.

The separator 140 may be interposed between the cathode 100 and the anode 130. The separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator 140 may include a nonwoven fabric made of glass fibers having a high melting point, polyethylene terephthalate fibers, etc.

In some embodiments, the anode 130 may have an area (e.g., a contact area with the separator 140) and/or volume greater than that of the cathode 100. Thereby, lithium ions generated from the cathode 100 may smoothly migrate to the anode 130 without being precipitated during the process, for example.

According to exemplary embodiments, an electrode cell is defined by the cathode 100, the anode 130 and the separator 140, and a plurality of electrode cells may be stacked to form, for example, a jelly roll type electrode assembly 150. For example, the electrode assembly 150 may be formed by winding, stacking, or folding the separator 140.

The electrode assembly 150 may be accommodated in the case 160 together with the non-aqueous electrolyte according to the above-described exemplary embodiments to define the lithium secondary battery. According to exemplary embodiments, the non-aqueous electrolyte may be used as the electrolyte.

The non-aqueous electrolyte may include a lithium salt of an electrolyte and an organic solvent. The lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, γ-butyrolactone, propylene sulfite and tetrahydrofuran, etc. may be used. These may be used alone or in combination of two or more thereof.

As shown in FIG. 1, electrode tabs (cathode tabs and anode tabs) protrude from the cathode current collector 105 and the anode current collector 125, respectively, which belong to each electrode cell, and may extend to one side of the case 160. The electrode tabs may be welded together with the one side of the case 160 to form electrode leads (a cathode lead 107 and an anode lead 127) that extend or are exposed to an outside of the case 160.

The lithium secondary battery may be manufactured, for example, in a cylindrical shape using a can, a prismatic shape, a pouch shape or a coin shape.

In the lithium secondary battery of the present disclosure, the gliding step height of the cathode is 20 nm or less. The gliding step height may be a value that quantitatively represents the amount of gliding occurring on the cathode surface after repeated charging and discharging of the lithium secondary battery.

The gliding step height is calculated from a line scan graph obtained using an atomic force microscope (AFM) of the cathode surface in a fully discharged state after 500 repeated charge and discharge cycles of the lithium secondary battery.

For example, the cathode may be separated from the lithium secondary battery in a fully discharged state (e.g., SOC 0%) after repeated charge and discharge cycles. The surface of the cathode after the repeated charge and discharge cycles may be observed and analyzed using an AFM. Any surface region of the cathode active material layer surface may be observed and analyzed using an AFM.

When a battery including a cathode active material containing a lithium metal oxide is repeatedly charged and discharged, damage such as cracks may occur around the region where the gliding phenomenon occurs. This may irreversibly transform the layered structure into a rock salt structure. In addition, repeated charge and discharge cycles may increase the gliding step height, further degrading the battery performance.

In the lithium secondary battery according to the present disclosure, gliding may be suppressed even during repeated charge and discharge cycles. Accordingly, the formation of irregularities on the surface of the cathode active material layer may be reduced, and the gliding step height may be 20 nm or less. Consequently, the cycle life characteristics of the battery may be improved.

According to exemplary embodiments, the 500 charge-discharge cycles may be performed by charging the lithium secondary battery to a voltage of 4.3 V to 4.5 V and discharging it to a voltage of 3.0 V, repeating the cycle 500 times. For example, the charging may be performed at 0.5 C in CC/CV mode (0.05 C cut-off) to a voltage of 4.3 V to 4.5 V, and the discharging may be performed at 1.0 C to a voltage of 3.0 V. The 500 charge-discharge cycles may be performed at a temperature of 30 °C to 60 °C, for example, at about 45 °C.

The 500 charge-discharge cycles may not include the formation charge and discharge cycles. For example, the gliding step height may be calculated for the cathode obtained after repeating 500 charge-discharge cycles following the formation charge and discharge cycle of the battery.

The line scan may be performed along a straight line perpendicular to the longitudinal direction of the gliding observed using an atomic force microscope (AFM). Accordingly, the largest irregularity may be observed.

According to the line scan, the step height caused by the unevenness of the surface of the cathode active material layer may be measured. From this measurement, a line scan graph representing the step height along the line scan length may be obtained.

A plurality of line scan graphs may be obtained. In some cases, a sufficient number of measurement targets may not be observed in a single line scan graph. To ensure data reliability, multiple line scan graphs may be obtained by performing line scans in different regions of the cathode surface after the charge and discharge cycles.

In the line scan graph, mountain-like shapes may be observed. Each mountain shape represents a protruding portion of the unevenness and may correspond to deformation of the cathode active material due to a crystal structure change caused by the gliding phenomenon.

The line scan graph may depict a pair of parallel lines including two or more of the mountain-like shapes. The upper straight line of the parallel lines may be a straight line connecting the peaks of some of the mountain-like shapes, or may be tangent to the mountain-like shapes as any straight line.

The pair of parallel lines may further include another straight line parallel to the upper line. This line may be tangent to the valley points of some of the mountain-like shapes.

At least two of the mountain-like shapes are included between the pair of parallel lines. For example, at least two of the mountain-like shapes may be positioned between the parallel lines, while others may be outside the pair of parallel lines.

The slope of the parallel lines is not zero. For example, the parallel lines may be neither horizontal nor vertical relative to the axis.

The gliding step height is defined as the distance between the pair of parallel lines. The gliding step height may be defined as the distance between two points where any straight line perpendicular to the parallel lines intersects both lines.

The gliding step height of the cathode is 20 nm or less. In some embodiments, the gliding step height of the cathode may be 10 nm or less.

If the gliding step height exceeds 20 nm, excessive irreversible gliding may occur during repeated charge and discharge cycles, which may deteriorate the cycle life characteristics of the battery. In addition, by-products generated from excessive side reactions with the electrolyte at the gliding sites may act as resistance, thereby increasing the internal resistance of the battery.

According to exemplary embodiments, the lithium secondary battery may have an operating voltage of 4.3 V to 4.7 V. According to some embodiments, the lithium secondary battery may have an operating voltage of 4.3 V to 4.5 V. Accordingly, the battery may be operated in a high-voltage range.

Hereinafter, the embodiments of the present disclosure will be further described with reference to specific experimental examples. The examples and comparative examples included in the experimental examples are merely illustrative of the present disclosure and do not limit the scope of the appended claims. It will be apparent to those skilled in the art that various changes and modifications to the examples can be made within the scope and technical spirit of the present disclosure, and it is also understood that such changes and modifications fall within the scope of the appended claims.

**[Example]**

**Preparative Example: Preparation of preliminary lithium-nickel metal oxide particles**

$NiSO_4$, $CoSO_4$, and $MnSO_4$ were added and mixed at a molar ratio of 88:9:3 in distilled water from which dissolved oxygen had been removed by bubbling $N_2$ for 24 hours. The mixed solution was then placed in a reactor at 50 °C, and a co-precipitation reaction was performed for 48 hours using NaOH and $NH_4OH$ as a precipitant and a chelating agent, to obtain a $Ni_{0.88}Co_{0.09}Mn_{0.03}(OH)_2$ precursor having a median particle diameter (D50) of 3 $\mu$m as a transition metal precursor. The obtained precursor was dried at 80 °C for 12 hours and then further dried at 110 °C for 12 hours.

Lithium hydroxide and the transition metal precursor were added to a dry high-speed mixer at a ratio of 1.03:1 and uniformly mixed for 5 minutes. The mixture was placed in a calcination furnace under an oxygen atmosphere, heated to 820 °C at a heating rate of 2 °C/min, and subjected to a first calcination at 820 °C for 10 hours. Oxygen was continuously supplied to the calcination furnace at a flow rate of 20 L/min during the heating and calcination. After completion of the calcination, the mixture was naturally cooled to room temperature, and the calcined product was pulverized and classified using a jet mill to obtain preliminary lithium-nickel metal oxide particles having a single-particle structure (median particle diameter (D50): 3 $\mu$m), represented by $LiNi_{0.88}Co_{0.09}Mn_{0.03}O_2$.

**Example 1**

**Preparation of cathode active material**

A mixture was prepared including the preparative lithium-nickel metal oxide particles of the preparative example and $Co_3O_4$ particles having a spinel structure with a median particle diameter (D50) of 250 nm. The mixture was mixed so that the $Co_3O_4$ particle content among the coated particles was 1,000 ppm. The mixture was heat-treated at 750 °C for 120 minutes in an oxygen atmosphere to prepare coated particles.

FIG. 6 is a scanning electron microscope (SEM) image of the coated particle of Example 1.

**Manufacture of battery**

The coated particles, polyvinylidene fluoride (PVDF) as a binder, and carbon black as a conductive material were mixed in a weight ratio of 96:2:2 to prepare a cathode slurry. The cathode slurry was uniformly applied to an aluminum foil (thickness: 12 $\mu$m), and then dried and roll-pressed to form a cathode active material layer having an areal density of 12 mg/cm$^2$ and a thickness of 35 $\mu$m, thereby fabricating a cathode.

Artificial graphite and natural graphite as anode active materials, styrene-butadiene rubber as a binder, and carboxymethyl cellulose as a thickener were mixed in a weight ratio of 96:2:2, and then dispersed in water to prepare an anode active material slurry. The slurry was coated on a copper foil having a thickness of 8 $\mu$m, and then dried and roll-pressed to fabricate an anode.

A film separator made of polyethylene (PE) material having a thickness of 13 $\mu$m was stacked between the fabricated electrodes, and a cell was assembled using a pouch having dimensions of 5 mm (thickness) x 50 mm (width) x 60 mm (length). A non-aqueous electrolyte was then injected into the pouch to manufacture a 2 Ah-class lithium secondary battery for an electric vehicle (EV). As the non-aqueous electrolyte, a solution in which $LiPF_6$ was dissolved at a concentration of 1 M in a mixed solvent containing ethylene carbonate and ethyl methyl carbonate in a volume ratio of 25:75 was used.

**Example 2**

A cathode active material and a battery were manufactured in the same manner as in Example 1, except that $BaTiO_3$ particles having a perovskite structure and a median particle diameter (D50) of 230 nm were used instead of $Co_3O_4$ particles.

**Example 3**

A cathode active material and a battery were manufactured in the same manner as in Example 1, except that $BaTiO_3$ particles having a perovskite structure and a median particle diameter (D50) of 300 nm were used instead of the $Co_3O_4$ particles.

**Example 4**

A cathode active material and a battery were manufactured in the same manner as in Example 1, except that $SrTiO_3$ particles having a perovskite structure and a median particle diameter (D50) of 250 nm were used instead of the

$Co_3O_4$ particles.

**Example 5**

A cathode active material and a battery were manufactured in the same manner as in Example 1, except that $Li_7La_3Zr_2O_{12}$ particles having a garnet structure and a median particle diameter (D50) of 220 nm were used instead of the $Co_3O_4$ particles.

**Example 6**

A cathode active material and a battery were manufactured in the same manner as in Example 1, except that $Li_{1.3}Al_{0.3}Ti_{1.7}(PO_4)_3$ particles having a NASICON structure and a median particle diameter (D50) of 250 nm were used instead of the $Co_3O_4$ particles.

**Comparative Example 1**

A battery was prepared in the same manner as in Example 1, except that a core (D50: 3 $\mu$m) having a single-particle structure and a composition of $LiNi_{0.88}Co_{0.09}Mn_{0.03}O_2$ was used as the cathode active material.

**Comparative Example 2**

A cathode active material and a battery were manufactured in the same manner as in Example 1, except that $Co_3O_4$ particles having a single-particle structure and a median particle diameter (D50) of 20 nm were used.

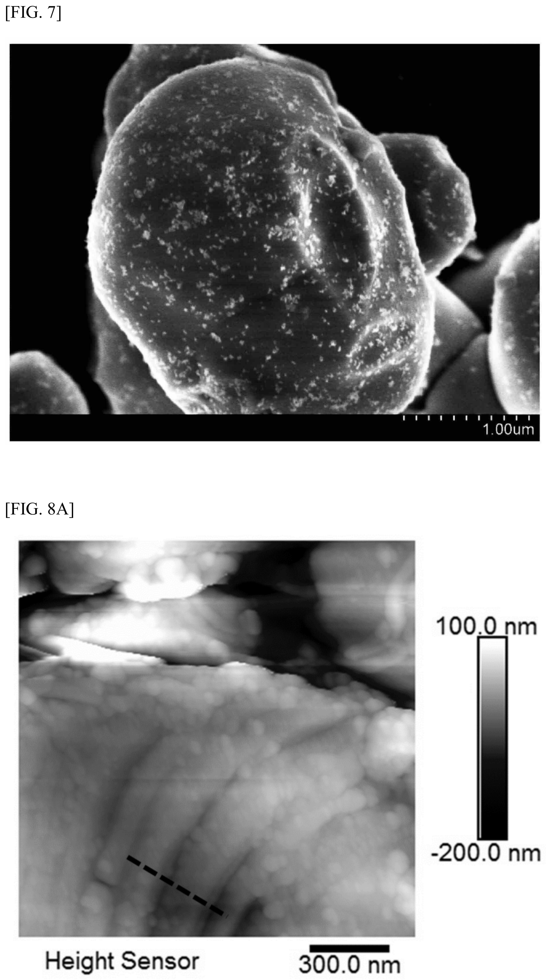

FIG. 7 is a scanning electron microscope (SEM) image of the coated particle of Comparative Example 2.

**Comparative Example 3**

A cathode active material and a battery were manufactured in the same manner as in Example 1, except that $Co_3O_4$ particles having a spinel structure and a median particle diameter (D50) of 80 nm were used.

**Comparative Example 4**

A cathode active material and a battery were manufactured in the same manner as in Example 1, except that $Co_3O_4$ particles having a spinel structure and a median particle diameter (D50) of 500 nm were used.

**Comparative Example 5**

A cathode active material was prepared in the same manner as in Preparative Example 1, except that during the mixing process of lithium hydroxide and the transition metal precursor, $Li_7La_3Zr_2O_{12}$ particles having a garnet structure and a median particle diameter (D50) of 220 nm were additionally mixed to a content of 2,000 ppm, followed by calcination. After calcination of the coated particles, a shell having a thickness of approximately 20 nm was formed on the surface of the core including the lithium metal oxide.
A battery were manufactured in the same manner as in Example 1, except that the cathode active material was used.

**Comparative Example 6**

A cathode active material was prepared in the same manner as in Comparative Example 5, except that a mixture was prepared so that the $Li_7La_3Zr_2O_{12}$ content in the coated particles was 5,000 ppm. At this time, a shell having a thickness of approximately 100 nm was formed on the surface of the core including the lithium metal oxide.
A battery were manufactured in the same manner as in Example 1, except that the cathode active material was used.

EP 4 746 062 A1

[TABLE 1]

| | Coating | | | | |
|---|---|---|---|---|---|
| | Coating type | D50 (nm) or thickness | Coating composition | Coating crystal structure | Content (ppm) |
| Example 1 | Particle, island form | 250 | $Co_3O_4$ | Spinel | 1,000 |
| Example 2 | Particle, island form | 230 | $BaTiO_3$ | Perovskite | 1,000 |
| Example 3 | Particle, island form | 300 | $BaTiO_3$ | Perovskite | 1,000 |
| Example 4 | Particle, island form | 250 | $SrTiO_3$ | Perovskite | 1,000 |
| Example 5 | Particle, island form | 220 | $Li_7La_3Zr_2O_{12}$ | Garnet | 1,000 |
| Example 6 | Particle, island form | 250 | $Li_{1.3}Al_{0.3}Ti_{1.7}(PO_4)_3$ | NASICON | 1,000 |
| Comparative Example 1 | - | - | - | - | - |
| Comparative Example 2 | Particle, island form | 20 | $Co_3O_4$ | Spinel | 1,000 |
| Comparative Example 3 | Particle, island form | 80 | $Co_3O_4$ | Spinel | 1,000 |
| Comparative Example 4 | Particle, island form | 500 | $Co_3O_4$ | Spinel | 1,000 |
| Comparative Example 5 | Shell | 20 | $Li_7La_3Zr_2O_{12}$ | Garnet | 2,000 |
| Comparative Example 6 | Shell | 100 | $Li_7La_3Zr_2O_{12}$ | Garnet | 5,000 |

Referring to FIGS. 6 and 7, it can be seen that the coated particles of Example 1 include metal oxide particles with a large particle diameter arranged in an island-like form on the core surface, while the coated particles of Comparative Example 2 include metal oxide particles with a small particle diameter on the core surface.

## Reference Example

A battery was manufactured in the same manner as in Example 1, except that a lithium-nickel metal oxide having a single-particle structure and a composition of $LiNi_{0.88}Co_{0.09}Mn_{0.03}O_2$ and $BaTiO_3$ particles having a a perovskite structure and a median particle diameter (D50) of 230 nm were mixed so that the $BaTiO_3$ content was 1,000 ppm, and the mixture was used as the cathode active material.

## Experimental Example

The electrochemical and physical properties of the batteries of the examples, comparative examples and reference example were evaluated using the following methods, and the results are shown in Table 2.

### (1) Evaluation of battery initial discharge capacity

The batteries of the examples, comparative examples and reference example were charged at room temperature (25°C) with a constant current (CC) of 0.1 C until the voltage reached 4.3 V. The batteries were then charged once at a constant voltage (CV) of 4.3 V until the charge current reached 0.05 C. After allowing the batteries to stand for 10 minutes, they were discharged once at a constant current of 0.1 C until the voltage reached 3.0 V, and the discharge capacity was measured.

### (2) Evaluation of battery cycle life characteristics

The batteries of the examples, comparative examples and reference example were charged at high temperature (45°C) with a constant current (CC) of 0.5 C until the voltage reached 4.3 V and were then charged at a constant voltage (CV) of 4.3 V until the charge current reached 0.05 C. Subsequently, the batteries were discharged at a constant current of 1.0 C until the voltage reached 3.0 V. This was repeated 500 times (cycles) and the capacity retention during the cycle life characteristic evaluation was measured according to the following equation. The capacity retention was calculated as the ratio of the discharge capacity after 500 cycles to the initial discharge capacity in (1).

Capacity retention (%) after 500 cycles = (Discharge capacity after 500 cycles (mAh/g))/(Initial discharge capacity (mAh/g)) $\times$ 100

(3) Evaluation of gliding phenomenon occurrence

After repeating (1) for 500 cycles, the cathode was completely discharged to 3.0 V at a constant current of 0.1 C. The cathode was then separated from the battery, and the surface of the cathode active material layer was observed using an atomic force microscope (AFM). Specifically, an AFM analyzer (Bruker, ICON) was used, and a probe with a spring constant of 42 N/m was employed to capture surface images of the cathode active material layer in a 5 $\mu$m $\times$ 5 $\mu$m region at a resolution of 1024 $\times$ 1024 and a scanning speed of 0.5 Hz. Line scanning was then performed. Parallel lines were drawn so that the step height graph obtained from the line scanning included at least two mountain-like shapes, and the distance between the parallel lines was measured.

FIG. 8A is an atomic force microscope (AFM) image of the cathode of Example 2 after repeated charge and discharge cycles.

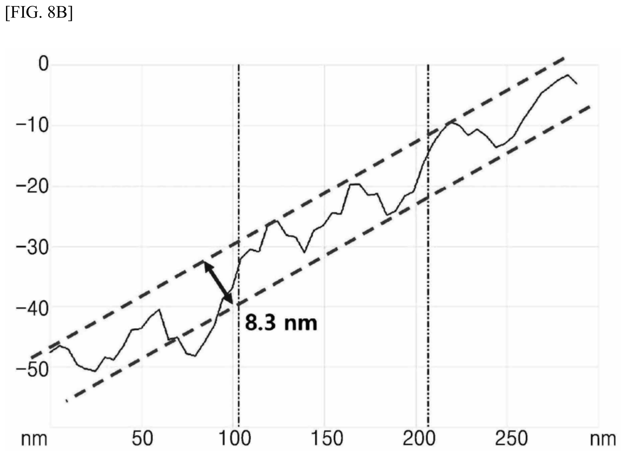

FIG. 8B is a graph showing a height profile (step height) of the cathode of Example 2 after repeated charge and discharge cycles, scanned along the dotted line in FIG. 8A.

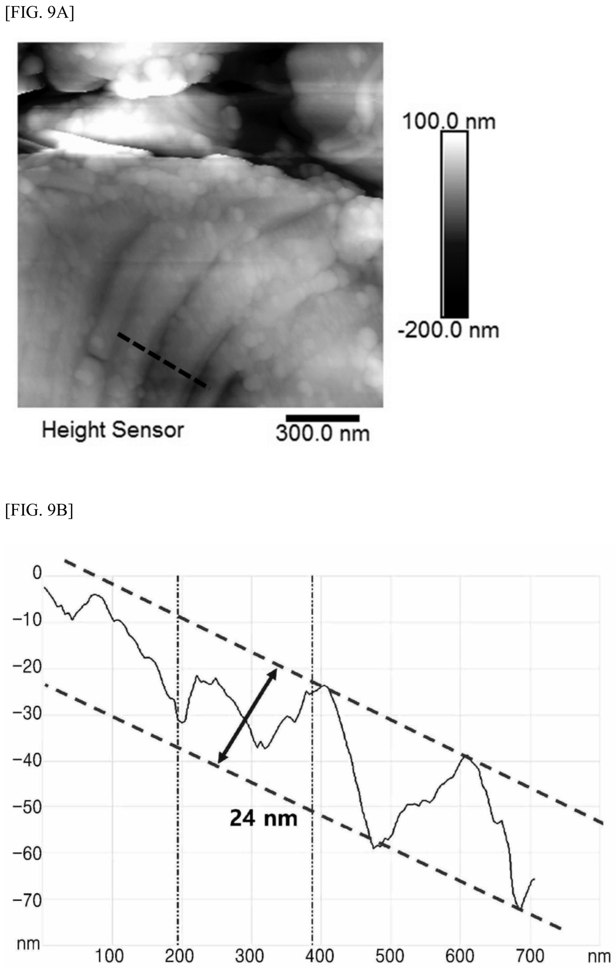

FIG. 9A is an AFM image of the cathode of Comparative Example 2 after repeated charge and discharge cycles. and

FIG. 9B is a graph showing a height profile of the cathode of Comparative Example 2 after repeated charge and discharge cycles, obtained by line scanning along the solid line in FIG. 9A.

[TABLE 2]

|  | Initial discharge capacity (mAh/g) | Capacity retention (%) | Average step height (nm) |
|---|---|---|---|
| Example 1 | 215.3 | 87.3 | 7.3 |
| Example 2 | 216.2 | 87.3 | 8.3 |
| Example 3 | 215.5 | 86.2 | 7.8 |
| Example 4 | 215.1 | 86.9 | 8.8 |
| Example 5 | 216.1 | 88.1 | 8.5 |
| Example 6 | 216.2 | 88.5 | 9.1 |
| Comparative Example 1 | 218.0 | 70 | 35.1 |
| Comparative Example 2 | 216.9 | 81.5 | 24.1 |
| Comparative Example 3 | 216.5 | 80.1 | 21.3 |
| Comparative Example 4 | 210 | 78.5 | - |
| Comparative Example 5 | 216.5 | 85 | 20.1 |
| Comparative Example 6 | 208.5 | - | - |
| Reference example | 218.0 | 70 | 35.3 |

Referring to Table 2, the batteries of the examples exhibited high initial discharge capacities while maintaining high capacities after repeated charge and discharge cycles. In addition, the occurrence of gliding in the layered structure of the core having a single-particle structure was suppressed, resulting in an average step height of 10 nm or less.

Referring to FIGS. 8A to 9B, in the cathode active material of Example 2, gliding was suppressed even during repeated charge and discharge cycles, and only a small step height of approximately 8.3 nm was formed. In contrast, in the cathode active material of Comparative Example 2, the metal oxide having a particle size of less than 100 nm did not suppress gliding, and a step height of approximately 24 nm was formed.

On the other hand, in Comparative Example 1 and the reference example, which used a lithium-nickel metal oxide having a single-particle structure without coating to fabricate the cathode, excessive gliding of the layered structure occurred, and the average step height exceeded 30 nm, significantly degrading the cycle life characteristics of the battery.

In Comparative Examples 2 and 3, which used cathode active materials coated with metal oxide particles having particle sizes of less than 100 nm, the gliding of the layered structure was not effectively suppressed.

In Comparative Example 4, which used a cathode active material coated with metal oxide particles having particle sizes greater than 450 nm, the density of the cathode active material in the cathode active material layer may have decreased, and the portion coated with large-particle metal oxide particles may have acted as a resistance to absorbing and releasing lithium ions, resulting in a slight decrease in the initial discharge capacity of the battery. In addition, the cycle life characteristics of the battery were partially degraded.

In Comparative Example 5, which used a cathode active material with a shell-type coating rather than an island-like form particle arrangement, the gliding phenomenon of the layered structure was not effectively suppressed. In particular, in Comparative Example 6, which used a cathode active material with a thicker shell-type coating, the initial discharge capacity of the battery was significantly reduced due to the excessively high content of the metal oxide, which resulted in a relatively low content of lithium-nickel metal oxide.

The contents described above are merely examples of applying the principles of the present disclosure, and other configurations may be further included without departing from the scope of the present disclosure.

The invention relates also to the following numbered aspects:

Aspect 1. A lithium secondary battery comprising:

a cathode; and
an anode disposed opposite to the cathode,
wherein the cathode has a gliding step height of 20 nm or less, and
wherein the gliding step height is defined as the distance between a pair of parallel lines having a non-zero slope and including at least two mountain-like shapes observed in a line scan graph obtained using an atomic force microscope (AFM) on the surface of the cathode in a fully discharged state after 500 charge-discharge cycles.

Aspect 2. The lithium secondary battery according to aspect 1, wherein the gliding step height of the cathode is 10 nm or less.

Aspect 3. The lithium secondary battery according to aspect 1 or 2, wherein the cathode comprises a cathode current collector and a cathode active material layer disposed on one surface of the cathode current collector,

wherein the cathode active material layer comprises coated particles, and
wherein the coated particles comprise: a core that includes a lithium-nickel metal oxide having a layered structure and has a single-particle structure; and
at least one metal oxide particle disposed on the surface of the core.

Aspect 4. The lithium secondary battery according to aspect 3, wherein the metal oxide particles have a median particle diameter (D50) of 100 nm to 450 nm.

Aspect 5. The lithium secondary battery according to aspect 3, wherein the metal oxide particles have a median particle diameter (D50) of 220 nm to 300 nm.

Aspect 6. The lithium secondary battery according to any one of aspects 3 to 5, wherein the metal oxide particles are arranged in an island-like form on the surface of the core.

Aspect 7. The lithium secondary battery according to any one of aspects 3 to 6, wherein the metal oxide particles have a spinel crystal structure, a perovskite crystal structure, a garnet crystal structure, or a NASICON crystal structure.

Aspect 8. The lithium secondary battery according to any one of aspects 3 to 7, wherein the metal oxide particles include at least one selected from the group consisting of Co, Ba, Ti, Sr, Li, La, Zr, Al, Y, W and P.

Aspect 9. The lithium secondary battery according to any one of aspects 3 to 8, wherein the content of the metal oxide particles is 500 ppm to 3,000 ppm based on the total weight of the coated particles.

Aspect 10. The lithium secondary battery according to any one of aspects 3 to 9, wherein the nickel content of the lithium-nickel metal oxide is 60 mol% to 99 mol% based on the total molar amount of elements excluding lithium and oxygen.

Aspect 11. The lithium secondary battery according to any one of aspects 3 to 10, wherein the core has a median particle diameter (D50) of 1 $\mu$m to 10 $\mu$m.

Aspect 12. The lithium secondary battery according to any one of aspects 3 to 11, wherein the core has a crystal grain size of 200 nm to 600 nm.

Aspect 13. The lithium secondary battery according to any one of aspects 1 to 12, wherein the 500 charge-discharge cycles are performed by repeatedly charging the lithium secondary battery to a voltage of 4.3 V to 4.5 V and discharging it to a voltage of 3.0 V 500 times. Aspect 14. The lithium secondary battery according to any one of aspects 1 to 13, wherein the lithium secondary battery has an operating voltage of 4.3 V to 4.7 V.

**Claims**

1. A lithium secondary battery comprising:

a cathode; and

an anode disposed opposite to the cathode,

wherein the cathode has a gliding step height of 20 nm or less, and

wherein the gliding step height is defined as the distance between a pair of parallel lines having a non-zero slope and including at least two mountain-like shapes observed in a line scan graph obtained using an atomic force microscope (AFM) on the surface of the cathode in a fully discharged state after 500 charge-discharge cycles.

2. The lithium secondary battery according to claim 1, wherein the gliding step height of the cathode is 10 nm or less.

3. The lithium secondary battery according to claim 1 or 2, wherein the cathode comprises a cathode current collector and a cathode active material layer disposed on one surface of the cathode current collector,

wherein the cathode active material layer comprises coated particles, and

wherein the coated particles comprise: a core that includes a lithium-nickel metal oxide having a layered structure and has a single-particle structure; and

at least one metal oxide particle disposed on the surface of the core.

4. The lithium secondary battery according to claim 3, wherein the metal oxide particles have a median particle diameter (D50) of 100 nm to 450 nm.

5. The lithium secondary battery according to claim 3, wherein the metal oxide particles have a median particle diameter (D50) of 220 nm to 300 nm.

6. The lithium secondary battery according to any one of claims 3 to 5, wherein the metal oxide particles are arranged in an island-like form on the surface of the core.

7. The lithium secondary battery according to any one of claims 3 to 6, wherein the metal oxide particles have a spinel crystal structure, a perovskite crystal structure, a garnet crystal structure, or a NASICON crystal structure.

8. The lithium secondary battery according to any one of claims 3 to 7, wherein the metal oxide particles include at least one selected from the group consisting of Co, Ba, Ti, Sr, Li, La, Zr, Al, Y, W and P.

9. The lithium secondary battery according to any one of claims 3 to 8, wherein the content of the metal oxide particles is 500 ppm to 3,000 ppm based on the total weight of the coated particles.

10. The lithium secondary battery according to any one of claims 3 to 9, wherein the nickel content of the lithium-nickel metal oxide is 60 mol% to 99 mol% based on the total molar amount of elements excluding lithium and oxygen.

11. The lithium secondary battery according to any one of claims 3 to 10, wherein the core has a median particle diameter (D50) of 1 $\mu$m to 10 $\mu$m.

12. The lithium secondary battery according to any one of claims 3 to 11, wherein the core has a crystal grain size of 200 nm to 600 nm.

13. The lithium secondary battery according to any one of claims 1 to 12, wherein the 500 charge-discharge cycles are performed by repeatedly charging the lithium secondary battery to a voltage of 4.3 V to 4.5 V and discharging it to a voltage of 3.0 V 500 times.

14. The lithium secondary battery according to any one of claims 1 to 13, wherein the lithium secondary battery has an operating voltage of 4.3 V to 4.7 V.

[FIG. 1]

107    127

I

150

160

I'

[FIG. 2]

140

110
105  100
110

120
125  130
120

160

[FIG. 3]

[FIG. 4]

[FIG. 5]

[FIG. 6]

[FIG. 7]

[FIG. 8A]

100.0 nm

-200.0 nm

Height Sensor

300.0 nm

[FIG. 8B]

[FIG. 9A]

Height Sensor

[FIG. 9B]

Europäisches
Patentamt

European
Patent Office

Office européen
des brevets

# EUROPEAN SEARCH REPORT

Application Number

EP 25 21 3561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BI YUJING ET AL: "Reversible planar gliding and microcracking in a single-crystalline Ni-rich cathode", SCIENCE, vol. 370, no. 6522, 11 December 2020 (2020-12-11), pages 1313-1317, XP093149295, US ISSN: 0036-8075, DOI: 10.1126/science.abc3167 * pages 1-4; figures 1-4 * | 1,2,14 | INV. H01M4/131 H01M4/36 H01M4/505 H01M4/525 H01M10/0525 |
| X | EP 4 415 072 A1 (LG CHEMICAL LTD [KR]) 14 August 2024 (2024-08-14) * paragraphs [0026], [0027], [0034], [0035], [0039], [0052], [0057], [0078] - [0081], [0085], [0088]; claims 1-5, 15 * | 1-14 | |
| X | US 2015/340689 A1 (SONG YU-MI [KR] ET AL) 26 November 2015 (2015-11-26) | 1-3,6, 8-11,14 | |
| A | * paragraphs [0023], [0037], [0043], [0104], [0105], [0117] - [0117], [0125]; figure 3 * | 4,5,12, 13 | TECHNICAL FIELDS SEARCHED (IPC)  H01M |
| X | SANAD MOUSTAFA M.S. ET AL: "Surface protection of NMC811 cathode material via ZnSnO3 perovskite film for enhanced electrochemical performance in rechargeable Li-ion batteries", COLLOIDS AND SURFACES A : PHYSIOCHEMICAL AND ENGINEERINGS ASPECTS, vol. 672, 5 September 2023 (2023-09-05), page 131748, XP093375652, AMSTERDAM, NL ISSN: 0927-7757, DOI: 10.1016/j.colsurfa.2023.131748 | 1-3, 7-11,14 | |
| A | * page 1 - page 9; table 4 * | 4-6,12, 13 | |

The present search report has been drawn up for all claims

| Place of search | Date of completion of the search | Examiner |
|---|---|---|
| The Hague | 23 March 2026 | Di Berardino, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 21 3561

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2026

| Patent document cited in search report | | Publication date | Patent family member(s) | | Publication date |
|---|---|---|---|---|---|
| EP 4415072 | A1 | 14-08-2024 | CA | 3237474 A1 | 05-10-2023 |
| | | | CN | 118202489 A | 14-06-2024 |
| | | | EP | 4415072 A1 | 14-08-2024 |
| | | | JP | 7827371 B2 | 10-03-2026 |
| | | | JP | 2025503124 A | 30-01-2025 |
| | | | KR | 20230142377 A | 11-10-2023 |
| | | | US | 2025279422 A1 | 04-09-2025 |
| | | | WO | 2023191604 A1 | 05-10-2023 |
| US 2015340689 | A1 | 26-11-2015 | KR | 20150134161 A | 01-12-2015 |
| | | | US | 2015340689 A1 | 26-11-2015 |

For more details about this annex : see Official Journal of the European Patent Office, No. 12/82